# EUROPÄISCHE PATENTANMELDUNG

(11) **EP 2 767 371 A1**
(43) Veröffentlichungstag der Anmeldung: **20.08.2014**
(21) Anmeldenummer: 14155387.5
(22) Anmeldetag: 17.02.2014
(51) Int. Cl.: B25J 15/00

(54) **Endeffektor für einen Manipulator und Vorrichtung sowie Verfahren zum Bearbeiten und/oder Handhaben von Werkstücken**

(30) Priorität: 18.02.2013 DE 102013202571
(71) Anmelder: Deutsches Zentrum für Luft- und Raumfahrt e.V., 51147 Köln (DE)
(72) Erfinder: Schönheits, Manfred, 86316 Augsburg (DE)
(74) Vertreter: Ege & Lee Patentanwälte

(57) **Zusammenfassung**

Endeffektor (1) für einen Manipulator, aufweisend mehrere Wirkmodule (9, 10) zum Zusammenwirken mit Werkstücken (11) und mehrere Aktuatormodule zum Bewegen der Wirkmodule, bei dem die Wirkmodule (9, 10) mithilfe der Aktuatormodule jeweils in sechs kartesischen Freiheitsgraden relativ zueinander bewegbar sind, um den Endeffektor (1) baulich und/oder funktional zu verbessern.

## Beschreibung

Die Erfindung betrifft einen Endeffektor für einen Manipulator, aufweisend mehrere Wirkmodule zum Zusammenwirken mit Werkstücken und mehrere Aktuatormodule zum Bewegen der Wirkmodule, eine Vorrichtung zum Bearbeiten und/oder Handhaben von Werkstücken aufweisend wenigstens einen derartigen Endeffektor und ein Verfahren zum Bearbeiten und/oder Handhaben von Werkstücken mithilfe eines Endeffektors und/oder einer derartigen Vorrichtung.

Aus der DE 10 2011 106 214 A1 ist ein Endeffektor, insbesondere Greifwerkzeug, bekannt für einen Manipulator, wobei der Endeffektor mit einem Werkstück zusammenwirkt, wobei mindestens ein insbesondere als Trägerplatte ausgestalteter Träger für eine Werkzeuganordnung vorgesehen ist und wobei die Werkzeuganordnung dem Zusammenwirken mit dem Werkstück dient, bei dem der Träger zumindest zum Teil aus einem verformbaren Material, insbesondere aus einem elastisch verform baren Material, ausgestaltet ist und dass dem Träger eine Stellanordnung zugeordnet ist, durch die der Träger verform bar und damit die Werkzeuganordnung im Raum ausrichtbar ist, um ein Werkzeug für einen Manipulator derart auszugestalten und weiterzubilden, dass es mit einfachen konstruktiven und steuerungstechnischen Mitteln in einem weiten Bereich auf beliebige Werkstückoberflächen ausgerichtet werden kann.

Gemäß der DE 10 2011 106 214 A1 sind Greifelemente an der dem zu greifenden Werkstück zugewandten Seite des Trägers angeordnet. Diese Greifelemente sind über die Oberfläche des Trägers verteilt, sodass sich die Ausrichtung der Greifanordnung durch die Verformung des Trägers bewerkstelligen lässt. Mit dem Träger sind konvexe Formen, konkave Formen, verdrillte Flächen und eine sphärische Form erzeugbar.

Der Erfindung liegt die Aufgabe zugrunde, einen eingangs genannten Endeffektor baulich und/oder funktional zu verbessern. Insbesondere sollen die Wirkmodule jeweils unabhängig voneinander frei ausrichtbar sein. Insbesondere sollen die Wirkmodule in einer Ebene frei ausrichtbar sein. Insbesondere sollen die Wirkmodule räumlich frei ausrichtbar sein. Insbesondere sollen die Wirkmodule in einer einfach oder mehrfach gekrümmten Fläche frei ausrichtbar sein. Insbesondere soll eine Ausrichtung der Wirkmodule räumlich frei veränderbar sein. Insbesondere soll ein biegeschlaffes Halbzeug zunächst in ebenem Zustand greifbar und nachfolgend automatisiert dreidimensional verformbar sein.

Die Lösung der Aufgabe erfolgt mit einem Endeffektor für einen Manipulator, aufweisend mehrere Wirkmodule zum Zusammenwirken mit Werkstücken und mehrere Aktuatormodule zum Bewegen der Wirkmodule, bei dem die Wirkmodule mithilfe der Aktuatormodule jeweils in sechs kartesischen Freiheitsgraden relativ zueinander bewegbar sind.

Der Endeffektor kann einem Industrieroboter zum Halten und/oder Bearbeiten von Werkstücken dienen. Der Endeffektor kann ein Greifwerkzeug sein. Der Endeffektor kann ein Bearbeitungswerkzeug sein. Der Endeffektor kann als letztes Element einer kinematischen Kette eines Industrieroboters dienen. Der Endeffektor kann zur Anordnung an einem Manipulator eines Industrieroboters dienen. Der Endeffektor kann mehrere Tool Center Points (TCP) aufweisen.

Ein Wirkmodul kann ein Greifelement aufweisen. Ein Wirkmodul kann ein Saugelement aufweisen. Ein Wirkmodul kann ein mechanisches Greifelement aufweisen. Ein Wirkmodul kann ein elektrostatisches Greifelement aufweisen. Ein Wirkmodul kann ein elektromagnetisches Greifelement aufweisen. Ein Wirkmodul kann ein Werkzeug zur spanenden Bearbeitung eines Werkstücks aufweisen. Ein Wirkmodul kann ein Werkzeug zum Auftragen eines Mediums auf ein Werkstück aufweisen. Ein Aktuatormodul kann wenigstens einen Aktuator aufweisen. Ein Aktuatormodul kann wenigstens einen elektromotorischen Aktuator aufweisen. Ein Aktuatormodul kann wenigstens ein Getriebe aufweisen. Jedem Wirkmodul kann wenigstens ein Aktuatormodul zugeordnet sein. Jedem Wirkmodul können mehrere Aktuatormodule zugeordnet sein.

Die Wirkmodule können jeweils voneinander kinematisch unabhängig bewegbar sein. "Kinematisch unabhängig" kann in diesem Zusammenhang bedeuten, dass eine Bewegung eines Wirkmoduls ohne kinematischen Einfluss auf andere Wirkmodule ist oder dass bei einer Bewegung eines Wirkmoduls ein kinematischer Einfluss auf andere Wirkmodule zumindest annähernd kompensierbar ist.

Die Wirkmodule können jeweils räumlich frei angepasst auf vorbestimmte Einwirkabschnitte eines Werkstücks einwirken. Unterschiedliche Werkstücke können unterschiedlich angeordnete Einwirkabschnitte aufweisen. Die Wirkmodule können jeweils auf unterschiedlich angeordnete Einwirkabschnitte einstellbar sein.

Mithilfe der Wirkmodule können Werkstücke jeweils angepasst an vorbestimmten Halteabschnitten aufnehmbar sein. Mithilfe des Endeffektors können Werkstücke jeweils räumlich frei drapierbar sein. Ein Werkstück kann ein flächiges Halbzeug sein. Ein Werkstück kann biegeschlaff sein. Ein Werkstück zunächst eben sein. Ein Werkstück zunächst faltig sein. Ein Werkstück einteilig sein. Ein Werkstück kann abschnittsweise beispielsweise stoff- und/oder formschlüssig verbunden sein. Ein Werkstück kann mehrere miteinander beispielsweise stoff- und/oder formschlüssig verbundene Einzelteile aufweisen. Ein Werkstück kann aus einem Faserwerkstoff bestehen. Ein Faserwerkstoff kann Glasfasern, Kohlenstofffaser, Keramikfasern, Aramidfasern, Naturfasern und/oder Kunststofffasern aufweisen. Die Fasern können unidirektional, als Gewebe oder als Gelege vorliegen. Mithilfe des Endeffektors kann ein Werkstück in zumindest annähernd ebener Form aufnehmbar sein. Mithilfe des Endeffektors kann ein Werkstück in räumlicher Form aufnehmbar sein. Mithilfe des Endeffektors kann ein Werkstück auf eine gekrümmte Oberfläche eines Werkzeugs aufbringbar sein. Mithilfe des Endeffektors kann ein Werkstück an eine gekrümmte Oberfläche eines Werkzeugs anpassbar sein. Mithilfe des Endeffektors kann ein Werkstück streckbar und/oder verziehbar sein. Mithilfe des Endeffektors können Fasern eines Werkstücks ausrichtbar sein. Der Endeffektor kann zum Herstellen von Faserverbundbauteilen dienen. Der Endeffektor kann zum Herstellen von Prepregs dienen.

Mehrere Aktuatormodule können einen kinematisch redundanten Aktuatorarm bilden. Die mehreren Aktuatormodule können aneinander anschließend angeordnet sein. Ein Aktuatorarm kann mehrere Gelenke aufweisen. Ein Aktuatorarm kann mehrere Kreuz- und/oder Kugelgelenke aufweisen. Eine Anzahl von Freiheitsgraden der Gelenke kann gleich oder größer sein als eine Anzahl von benötigten kartesischen Freiheitsgraden. Zwischen den Wirkmodulen können jeweils sechs oder mehr Freiheitgrade vorhanden sein. Ein Aktuatorarm kann mehrere Wirkmodule aufweisen und zwischen den Wirkmodulen können jeweils mehrere Aktuatormodule angeordnet sein. Der Endeffektor kann mehrere Aktuatorarme aufweisen.

Außerdem wird die der Erfindung zugrundeliegende Aufgabe gelöst mit einer Vorrichtung zum Bearbeiten und/oder Handhaben von Werkstücken aufweisend wenigstens einen derartigen Endeffektor, wenigstens einen Manipulator und eine Steuereinrichtung zum Steuern des wenigstens einen Endeffektors und/oder des wenigstens einen Manipulators. Die Steuereinrichtung kann eine Recheneinrichtung und eine Speichereinrichtung aufweisen.

Außerdem wird die der Erfindung zugrundeliegende Aufgabe gelöst mit einem Verfahren zum Bearbeiten und/oder Handhaben von Werkstücken mithilfe eines derartigen Endeffektors und/oder einer derartigen Vorrichtung. Mehrere Endeffektoren und/oder Manipulatoren können koordiniert gesteuert werden, um ein Werkstück zu bearbeiten und/oder zu handhaben.

Zusammenfassend und mit anderen Worten dargestellt ergibt sich somit durch die Erfindung unter anderem eine automatisierte Aufnahme und dreidimensionale Umformung von biegeschlaffen Halbzeugen mit Hilfe von hyperredundanten Manipulatoren zur Formgebung in zweifach gekrümmte, d.h. nicht abwickelbare Oberflächen. Die Wirkflächen können zueinander in sechs Freiheitsgraden verstellbar sein. Damit kann die Möglichkeit gegeben sein, biegeschlaffe Halbzeuge automatisiert in zweifach bzw. mehrfach gekrümmte Werkzeugformen einzubringen. Halbzeuge können automatisch aktive vom Ursprungszustand zur dreidimensional verformten Zielkonfiguration durch die Manipulator-/Greiferplattform verformt werden.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Mit der Erfindung sind die Wirkmodule jeweils unabhängig voneinander frei ausrichtbar. Die Wirkmodule sind in einer Ebene frei ausrichtbar. Die Wirkmodule sind räumlich frei ausrichtbar. Die Wirkmodule sind in einer einfach oder mehrfach gekrümmten Fläche frei ausrichtbar. Eine Ausrichtung der Wirkmodule ist räumlich frei veränderbar. Ein biegeschlaffes Halbzeug ist zunächst in ebenem Zustand greifbar und nachfolgend automatisiert dreidimensional verformbar.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
- Fig. 1: einen armförmigen Endeffektor für einen Manipulator eines Industrieroboters mit Armmodulen, Gelenken und Greifelementen beim Aufnehmen eines biegeschlaffen Halbzeugs,
- Fig. 2: einen armförmigen Endeffektor für einen Manipulator eines Industrieroboters mit Armmodulen, Gelenken und Greifelementen beim Drapieren eines biegeschlaffen Halbzeugs,
- Fig. 3: eine Vorrichtung mit zwei Robotern beim Aufnehmen eines biegeschlaffen Halbzeugs,
- Fig. 4: eine Vorrichtung mit zwei Robotern beim Drapieren eines biegeschlaffen Halbzeugs,
- Fig. 5: einen Roboter mit einem mehrarmigen Endeffektor zum Aufnehmen und Drapieren eines biegeschlaffen Halbzeugs in angepasster Position,
- Fig. 6: einen Roboter mit einem mehrarmigen Endeffektor zum Aufnehmen und Drapieren eines biegeschlaffen Halbzeugs in angepasster Position und
- Fig. 7: einen Roboter mit einem mehrarmigen Endeffektor zum Aufnehmen und Drapieren eines biegeschlaffen Halbzeugs in angepasster Position.

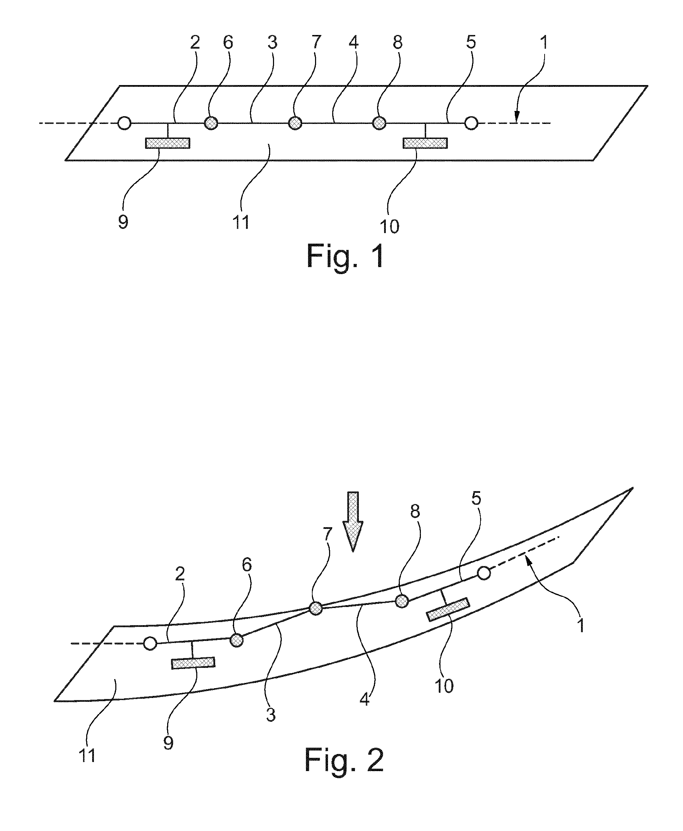

Fig. 1 zeigt ausschnittsweise einen armförmigen Endeffektor 1 für einen Manipulator eines Industrieroboters mit Armmodulen 2, 3, 4, 5, Gelenken 6, 7, 8, und Greifelementen 9, 10 beim Aufnehmen eines biegeschlaffen Halbzeugs 11. Fig. 2 zeigt den Endeffektor 1 beim Drapieren des Halbzeugs 6.

Die Armmodule 2, 3, 4, 5 sind jeweils mithilfe eines Gelenks 6, 7, 8 beweglich verbunden. An dem Armmodul 2 ist das Greifelement 9 angeordnet. An dem Armmodul 5 ist das Greifelement 9 angeordnet. Die drei Gelenke 6, 7, 8 sind zwischen den Greifelementen 9, 10 angeordnet. Die Gelenke 6, 7, 8 sind vorliegend Kreuzgelenke. Die Gelenke 6, 7, 8 weisen jeweils zwei Freiheitsgrade auf. Damit sind die Greifelemente 9, 10 in sechs Freiheitsgraden relativ zueinander bewegbar.

Das Halbzeug 6 besteht aus Kohlenstofffasern und dient zur Herstellung eines kohlenstofffaserverstärkten Kunststoffbauteils oder eines Prepregs. Das Halbzeug 6 wird in ebenem Zustand aufgenommen. Beispielsweise liegt das Halbzeug 6 auf einer ebenen Auflagefläche auf. Zum Aufnehmen werden zunächst die Greifelemente 9, 10 in einer Ebene ausgerichtet, wobei die Greifelemente 9, 10 mit Halteabschnitten des Halbzeugs 6 in Übereinstimmung gebracht werden. Nachfolgend wird das Halbzeug 6 gegriffen und drapiert. Die Greifelemente 9, 10 werden räumlich zueinander bewegt, sodass das Halbzeug 6 in eine vorgegebene Form gebracht wird. Dabei kann das Halbzeug 6 gestreckt und verzogen werden und ein Faserverlauf kann eingestellt werden. Das Drapieren kann frei oder an einer Werkzeugoberfläche erfolgen. Das drapierte Halbzeug 6 wird nachfolgend in einem Werkzeug abgelegt. Es können mehrere Halbzeuglagen geschichtet werden. Nachfolgend wird das Halbzeug 6 in eine Kunststoffmatrix eingebettet.

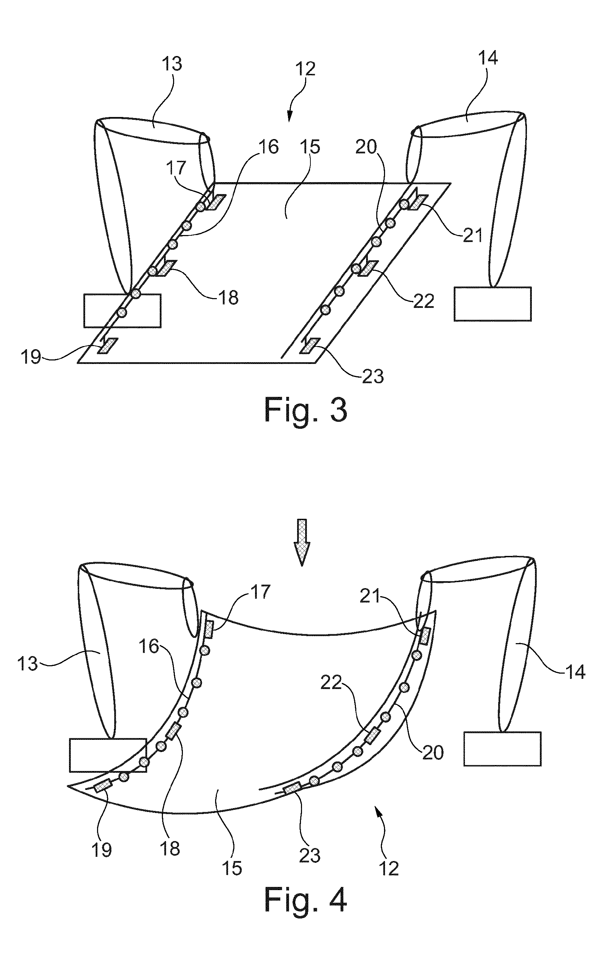

Fig. 3 zeigt eine Vorrichtung 12 mit zwei Robotern 13, 14 beim Aufnehmen eines biegeschlaffen Halbzeugs 15. Fig. 4 zeigt die Vorrichtung 12 beim Drapieren des Halbzeugs 15. Die Roboter 13, 14 weisen jeweils eine Basis und einen Manipulator auf. An dem Manipulator des Roboters 13 ist ein Endeffektor 16, wie Endeffektor 1 gemäß Fig. 1 und 2, angeordnet. Der Endeffektor 16 weist drei Greifelemente 17, 18, 19 auf. An dem Manipulator des Roboters 14 ist ein Endeffektor 20, wie Endeffektor 1 gemäß Fig. 1 und 2, angeordnet. Der Endeffektor 20 weist drei Greifelemente 21, 22, 23 auf. Die Roboter 13, 14 und die Manipulatoren der Roboter 13, 14 werden mithilfe einer Steuereinrichtung koordiniert gesteuert. Im Übrigen wird ergänzend insbesondere auf Fig. 1-2 und die zugehörige Beschreibung verwiesen.

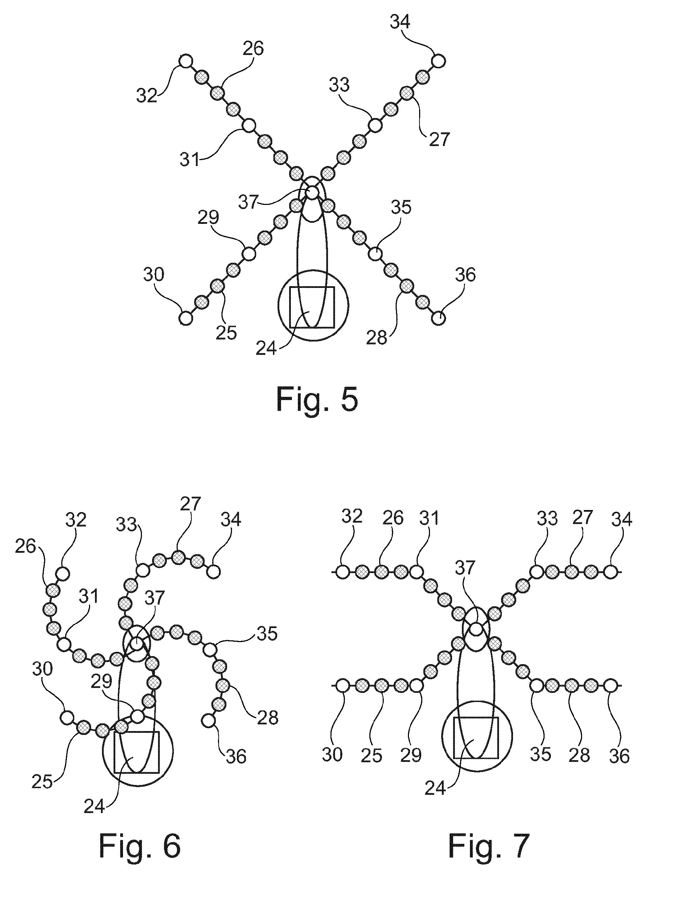

Fig. 5-7 zeigen jeweils einen Roboter 24 mit einem mehrarmigen Endeffektor zum Aufnehmen und Drapieren eines biegeschlaffen Halbzeugs. Der Endeffektor des Roboters 24 weist vier Arme 25, 26, 27, 28 auf. Der Arm 25 weist Greifelemente 29, 30 auf. Der Arm 26 weist Greifelemente 31, 32 auf. Der Arm 27 weist Greifelemente 33, 34 auf. Der Arm 28 weist Greifelemente 35, 36 auf. Der Endeffektor des Roboters 24 weist ein zentrales Greifelement 37 auf. Zwischen den Greifelementen 29, 30, 31, 32, 33, 34, 35, 36, 37 sind jeweils Gelenke mit sechs Freiheitgraden angeordnet.

Fig. 5-7 zeigen die Arme 25, 26, 27, 28 jeweils in an ein Werkstück angepasster Position. In Fig. 5 sind die Arme 25, 26, 27, 28 jeweils gerade ausgestreckt und bilden eine kreuzartige Anordnung. In Fig. 5 sind die Arme 25, 26, 27, 28 jeweils kreisbogenartig gebogen. In Fig. 5 sind die Arme 25, 26, 27, 28 jeweils abgewinkelt.

### Bezugszeichen

- 1: Endeffektor
- 2: Armmodul
- 3: Armmodul
- 4: Armmodul
- 5: Armmodul
- 6: Gelenk
- 7: Gelenk
- 8: Gelenk
- 9: Greifelement
- 10: Greifelement
- 11: Halbzeug
- 12: Vorrichtung
- 13: Roboter
- 14: Roboter
- 15: Halbzeug
- 16: Endeffektor
- 17: Greifelement
- 18: Greifelement
- 19: Greifelement
- 20: Endeffektor
- 21: Greifelement
- 22: Greifelement
- 23: Greifelement
- 24: Roboter
- 25: Arm
- 26: Arm
- 27: Arm
- 28: Arm
- 29: Greifelement
- 30: Greifelement
- 31: Greifelement
- 32: Greifelement
- 33: Greifelement
- 34: Greifelement
- 35: Greifelement
- 36: Greifelement
- 37: Greifelement

## Patentansprüche

1. Endeffektor (1, 16, 20) für einen Manipulator, aufweisend mehrere Wirkmodule (9, 10, 17, 18, 19, 21, 22, 23 29, 30, 31, 32, 33, 34, 35, 36, 37) zum Zusammenwirken mit Werkstücken (11, 15) und mehrere Aktuatormodule zum Bewegen der Wirkmodule, **dadurch gekennzeichnet, dass** die Wirkmodule (9, 10, 17, 18, 19, 21, 22, 23 29, 30, 31, 32, 33, 34, 35, 36, 37) mithilfe der Aktuatormodule jeweils in sechs kartesischen Freiheitsgraden relativ zueinander bewegbar sind.

2. Endeffektor (1, 16, 20) nach Anspruch 1, **dadurch gekennzeichnet, dass** die Wirkmodule (9, 10, 17, 18, 19, 21, 22, 23 29, 30, 31, 32, 33, 34, 35, 36, 37) jeweils räumlich frei angepasst auf vorbestimmte Einwirkabschnitte eines Werkstücks (11, 15) einwirken können.

3. Endeffektor (1, 16, 20) nach wenigstens einem der vorhergehenden Ansprüche, **dadurch gekennzeichnet, dass** mithilfe der Wirkmodule (9, 10, 17, 18, 19,21, 22, 23 29, 30, 31, 32, 33, 34, 35, 36, 37) Werkstücke (11, 15) jeweils angepasst an vorbestimmten Halteabschnitten aufnehmbar und räumlich frei drapierbar sind.

4. Endeffektor (1, 16, 20) nach wenigstens einem der vorhergehenden Ansprüche, **dadurch gekennzeichnet, dass** mehrere Aktuatormodule einen kinematisch redundanten Aktuatorarm (25, 26, 27, 28) bilden.

5. Endeffektor (1, 16, 20) nach wenigstens einem der vorhergehenden Ansprüche, **dadurch gekennzeichnet, dass** ein Aktuatorarm (25, 26, 27, 28) mehrere Wirkmodule (9, 10, 17, 18, 19, 21, 22, 23 29, 30, 31, 32, 33, 34, 35, 36, 37) aufweist und zwischen den Wirkmodulen (9, 10, 17, 18, 19, 21, 22, 23 29, 30, 31, 32, 33, 34, 35, 36, 37) jeweils mehrere Aktuatormodule angeordnet sind.

6. Endeffektor (1, 16, 20) nach wenigstens einem der vorhergehenden Ansprüche, **dadurch gekennzeichnet, dass** der Endeffektor (1, 16, 20) mehrere Aktuatorarme (25, 26, 27, 28) aufweist.

7. Vorrichtung (12) zum Bearbeiten und/oder Handhaben von Werkstücken (11, 15) aufweisend wenigstens einen Endeffektor (1, 16, 20) nach wenigstens einem der vorhergehenden Ansprüche, wenigstens einen Manipulator und eine Steuereinrichtung zum Steuern des wenigstens einen Endeffektors (1, 16, 20) und/oder des wenigstens einen Manipulators.

8. Verfahren zum Bearbeiten und/oder Handhaben von Werkstücken (11, 15) mithilfe eines Endeffektors (1, 16, 20) nach wenigstens einem der Ansprüche 1-6 und/oder einer Vorrichtung (12) nach Anspruch 7.

9. Verfahren nach Anspruch 8, **dadurch gekennzeichnet, dass** mehrere Endeffektoren (1, 16, 20) und/oder Manipulatoren koordiniert gesteuert werden, um ein Werkstück (11, 15) zu bearbeiten und/oder zu handhaben.
